# EUROPEAN PATENT SPECIFICATION

(11) **EP 0 626 575 B1**
(45) Date of publication and mention of the grant of the patent: **02.01.2002**
(21) Application number: 94303855.4
(22) Date of filing: 27.05.1994
(51) Int. Cl.: G01N 21/64, G01N 15/14

(54) **Method and apparatus for microscopic imaging**
Verfahren and Gerät zur mikroskopischen Abbildung
Méthode et appareil pour l'imagerie microscopique

(30) Priority: 27.05.1993 FI 932436
(43) Date of publication of application: 30.11.1994
(73) Proprietor: WALLAC OY, SF-20101 Turku (FI)
(72) Inventor: Väisälä, Mikko, SF-21500 Piikkiö (FI)
(74) Representative: Gallafent, Richard John

(56) References cited:
- US-A- 4 647 531
- US-A- 4 773 097
- US-A- 5 093 866
- US-A- 5 159 397
- CYTOMETRY, vol.9, no.6, 1 November 1988 pages 566 - 572 JAGGI ET AL. 'IMAGING SYSTEM FOR MORPHOMETRIC ASSESSMENT,ETC.'
- BOVIK ET AL. 'PROVEEDINGS OF THE SPIE VOL.1245:BIOMEDICAL IMAGE PROCESSING' 1 October 1990 , SPIE COMM.OF D.SUDAR : SEGMENTATION METHODS IN IMAGE CYTOMETRY; PAGES 206-209
- PATENT ABSTRACTS OF JAPAN vol. 3, no. 5 (E-84) 18 January 1979 & JP-A-53 132 398 (SHARP K.K.) 18 November 1978

## Description

This invention relates to a method used in image analysis for delimitation of a field in the digitized image of an object, in which method the image is observed by means of an observation device, such as e.g. a microscope, and the image of the object is obtained with a detector, such as a digitizing camera.

In image analysis, segmentation refers to delimitation of the field of interest from the background. Typically, areas are delimited from the image field of the digitized image on the basis of the signal level. Segmentation is used in situations such as studies of labelled objects including cells and particles, e.g. studies of luminescence of spherical microparticles. In practice, it is helpful, if luminescence measurement of an image containing objects can be carried out with attention directed to the objects alone, disregarding any fields between the objects.

Segmentation can be carried out when the signal of the object is different from the background signal. The simplest and most common method of segmentation is what is known as the thresholding method. In this method any picture elements above a set limit value are regarded as belonging to the object. The limit value should be set so high that background noise also remains below the set limit value.

A microscope can be used to study objects, such as cells and particles, by studying the luminescence of the objects, i.e. by studying what kind of light they emit when the specimen is exposed to excitation light. By changing the method of excitation and the properties of the excitation light and by labelling objects, objects with different properties can be distinguished from one another. By means of labels, specific elements can be distinguished in the specimens of interest in them, and the concentrations of substances of interest can also be determined.

Luminescence measurement can be simultaneous, or immediate, hereinafter referred to as 'prompt'. Prompt measurement is used to measure the light emitted immediately by the specimen, which is emitted simultaneously or at least almost simultaneously with the excitation light. The excitation light beam may be continuous or it can be applied as one or more light pulses.

Luminescence measurement may also be delayed, or time-resolved. Time-resolved luminescence is hereinafter referred to as TR measurement, from the English word 'time-resolved'. In this method the light emitted by the specimen after excitation by the excitation light pulse is measured after a time interval. The purpose of this method is to measure the luminescence deriving from the label, without allowing luminescence emitted by the object itself to affect the result of the measurement. Therefore, the label is usually an agent emitting long-lived luminescence so that in time-resolved, i.e. TR, measurement the short-lived luminescence emitted by the object has already decayed.

Time-resolved TR fluorescence measurement methods have been presented for example in applicant's earlier US patents 4,565,790 and 4,808,541. In the present context, however, luminescence measurement refers more generally to all the various methods of measuring light emissions, e.g. also phosphorescence. Luminescence has been discussed in publications such as George G. Guilbault: "Practical Fluorescence", Marcel Dekker, New York 1973, pages 2-7 in the section titled "Types of Luminescence".

Analyses of digitized images have shown that differences in signal levels between objects can be so great that it is impossible to distinguish objects emitting low levels of signals from the background. Thus it has been found necessary to develop segmentation methods. The following is a presentation of a novel method of segmentation, which is considerably more effective than the prior art methods.

This invention relates to the development of a method which permits delimitation in an image of a field or fields which contain the signal to be analysed, with the result that optimally true and objective information is obtained even when the signal levels obtained on the basis of the selection criterion are low.

It is characteristic of the method relating to the invention that
a) two or more digital images or analogical images which are digitised are obtained of the object to be imaged without changing the position or location of the camera or the object,
b) at least one of the images of step a) is obtained by imaging a different wavelength of light from the other images, or at a different time relative to an excitation event, to the other image or images,
c) at least one differently wavelengthed or timed image of step b) is segmented and the delimitation information so gained used to delimit one or more fields in the image,
d) one or more of the images of step a) that is not segmented as in step c) is analysed using the fields determined in step c).
For such measurement, two separate luminescence events can be used so that segmentation is based on one event and the actual measurement of the object is based on the other event. Thus, for example, a Prompt luminescence image can be used for segmentation in time-resolved fluorescence microscopy. The Prompt image shows luminescence emitted by rapid labelling of cellular proteins or particles, and delimitation of these fields helps to define the location and size of objects. Practical measurements may be carried out, for example, in such a way that a time-resolved TR image is obtained of the specimen and stored in a computer memory. Then, a Prompt image is obtained and stored likewise. Afterwards, segmentation is carried out on the basis of the Prompt image, and the TR image in the computer memory is analysed on the basis of segmentation from the Prompt image.

Correspondingly, segmentation may be carried out on microparticles with a rapid fluorescent labelling agent on their surfaces or within them. This label does not participate in any biospecific reaction with the environment; instead, it serves the purpose of segmentation, for example. In this case, a time-resolved fluorescence emitting label is used for the biospecific signal to be analysed.

One essential advantage of the method according to the invention is that any mechanical or optical disturbances of the measuring system are minimized. This is due to the fact that the TR and Prompt images of the specimen are obtained in such a way that it is unnecessary to touch the specimen, camera or any optical, mechanical, electronic and other components between them during the process. When many images are obtained, only electronic control equipment need be used, which does not mechanically, optically or magnetically interfere with the imaging. An error can only occur in the time intervals between the images, but this error can also be minimized.

The method can be implemented through several alternative applications. One application involves obtaining read-outs from one image of the light intensity emitted from at least one delimited field on the basis of the delimitation information given by one or more images. At desired time intervals, two or more images are obtained with the same detector, e.g. a camera, and at least one delimited field is analyzed on the basis of delimitation information from at least one other image. However, segmentation and analysis are always carried out for different images.

If two separate measuring channels, or two probes, or one probe capable of obtaining two separate images are available, two or more detectors such as cameras are used to take simultaneously or at desired time intervals two or more images, one of which is analyzed as regards at least one delimited field on the basis of delimitation information from other images. To distinguish between data from different images, different wavelengths of light can be used for different images.

In practice, a microscope and one or more cameras are used to image light emissions from the object of interest caused by one or more excitation events, such as an excitation light pulse or a series of pulses, so that at least two images are obtained, at desired time intervals, with one or more detectors, of the luminescence caused by excitation light pulses, such as phosphorescence or fluorescence, and that in one image a read-out of light intensity is obtained for at least one delimited field on the basis of delimitation information from one or more images.

An alternative method is to obtain at least two images simultaneously with two or more detectors of luminescence, such as phosphorescence or fluorescence, caused by one or several excitation events.

When a fluorescence microscope equipped with an auxiliary TR unit is available, the fluorescence microscope is first used to obtain an image exposed by means of time windows opened after an excitation light pulse or a time difference following several pulses or, in other words, a TR fluorescence image, which is digitized and stored in a computer memory. Additionally, at least one immediate, or prompt, luminescence image is obtained which is used for segmentation, that is for determination of the fields to be delimited. This delimitation information is then used for analysis of the delimited fields from the digitized TR fluorescence image which was obtained earlier and stored in the computer memory, Any error due to a change in the position or location of the camera or the object is corrected by superimposing one digitized image on the other by means of a computer, e.g. by using a suitable degree of horizontal shift.

The advantages of the method according to the invention are greatest when specific signal levels used in the measurements are low, i.e. when high sensitivity is required or signal levels are close to the detection limit. When the specific signal levels are high, there is no need to use the method according to the invention, and the method is not necessarily very useful. The method according to the invention is not specifically tied to the label used. In time-resolved fluorescence microscopy, the method can be applied to measuring e.g. europium fluorescence with a microscope.

The invention also relates to apparatus used in image analysis for the delimitation of a field in the image of the object, which apparatus incorporates an observation instrument, such as a microscope, and a detector, such as a camera.

Apparatus according to the invention for use in image analysis for the delimitation of at least one field in a first image of an object including an observation instrument, such as a microscope, at least one detector means, such as a camera, and an analysing unit, is characterised in that it includes a device that transmits at least part of a second image of the object differing from the first image in time or wavelength but without change of the position or location of the detector means or the object to one or more detector means and via those means to the analysing unit, and the analysing unit is constructed to segment the second image to delimit at least one field in the second image, and then to analyse the first image using the delimited field(s) obtained by segmentation of the second image.

The implementation of the apparatus includes several alternative embodiments. According to one embodiment, the apparatus incorporates one camera and a filtering unit incorporating at least two changeable filters which permit obtaining two or more images filtered in different ways and obtained at desired time intervals.

According to another embodiment, the apparatus incorporates a camera to which only one optical path has been directed, and in the camera or outside it a filtering unit incorporating two or more layers which are semi-conducting layers, or other layers with good separation ability which permit imaging simultaneously or at desired time intervals and filtering the images in at least two different ways.

Furthermore, several detector heads may be used, in which case the apparatus incorporates two cameras and a beam splitter, which splits image information from the object into two parts for the cameras, and at least one of the cameras is equipped with a fast shutter or a corresponding gatable image intensifier.

In practice, the apparatus often incorporates a fluorescence microscope, at least one camera and a computer, in the memory of which can be stored a time-resolved TR fluorescence image, exposed and digitized after a time interval following an excitation pulse. The computer has also been equipped for analysis of the Prompt fluorescence image, which is used to determine fields to be delimited for analysis, i.e. the segmentation image. The delimitation information obtained in this manner is used to analyze the delimited fields of the computer-stored, digitized TR fluorescence image. The Prompt image can be exposed on the basis of either data obtained simultaneously from the same pulse or different pulses in the same connection, before or after the TR image.

The invention is described in the following using examples, with reference to the accompanying drawings, in which
- Figure 1: shows schematically the image of a specimen emitting long-lived fluorescence and obtained by means of a microscope.
- Figure 2: corresponds to Figure 1 and shows the image of a specimen emitting short-lived fluorescence and obtained by means of a microscope.
- Figure 3: is an axonometric three-dimensional projection of the intensity surface of a Prompt image.
- Figure 4: shows a section of Figure 3 along line IV-IV.
- Figure 5: shows Figure 2 segmented in the manner shown in Figures 3 and 4.
- Figure 6: is an analysis of Figure 1 by means of segmentation according to Figure 5.
- Figure 7: shows schematically the shutter function in microscopic imaging.
- Figure 8: shows the shutter plate of Figure 6 seen from above.
- Figure 9: is a schematic side view of the microscope used in time-resolved TR fluorescence imaging.
- Figure 10: corresponds to Figure 9 and shows the microscope used in immediate Prompt fluorescence imaging.
- Figure 11: corresponds to Figure 9 and shows the microscope used in absorption imaging.
- Figure 12: shows a microscope which is suitable for Prompt, TR and absorption imaging.
- Figure 13: is a schematic presentation of the imaging principle of a parallel detector.
- Figure 14: is a schematic presentation of the imaging principle of a serial detector.
- Figure 15: is a schematic presentation of the intensity of the luminescence pulse as a function of time and a method for the measurement of the pulse.
- Figure 16: is a schematic presentation of a second method for measurement of the luminescence pulse.
- Figure 17: is a schematic presentation of a third method for measurement of the luminescence pulse.

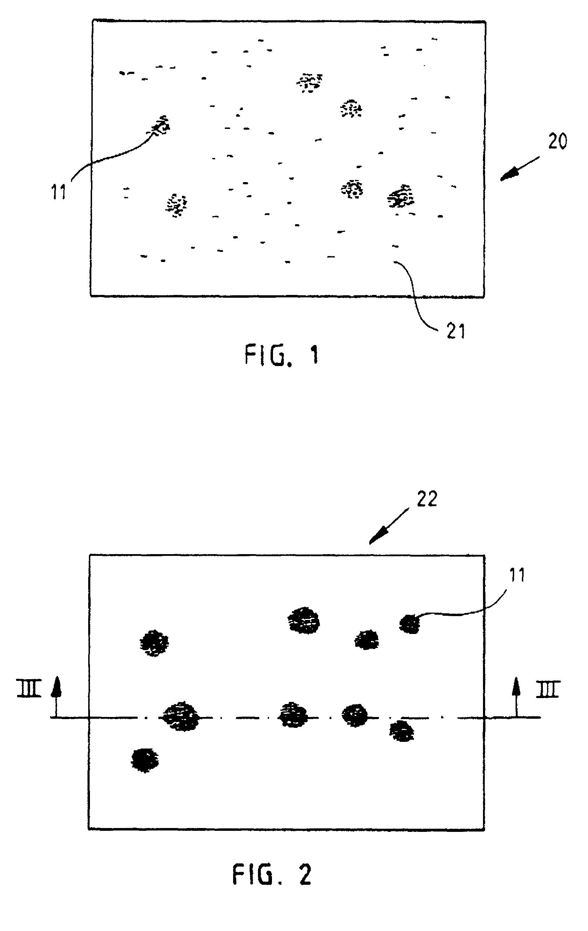

Figure 1 shows the digitized image 20 of specimen 10 emitting long-lived fluorescence and obtained by means of TR fluorescence measurement. Long-lived fluorescence in this context means a fluorescence event where the duration of the excitation state, i.e. duration of the fluorescence light emitted by the specimen, is of the magnitude of microseconds (µs = 10⁻⁶ s) and milliseconds (ms = 10⁻³ s). In time-resolved fluorescence measurement, an excitation light pulse is applied to the specimen, and the measurement is based on measuring after a desired time interval the light which is still emitted by the specimen after the time interval. In Figure 1, europium has been used as the label.

Figure 1 is a microscopic image as seen in the monitor. For the sake of clarity, the image has been reversed in such a way that the fields with higher intensity, i.e. the lighter fields, are shown as darker. Light intensities in picture elements, or pixels, due to the excitation light pulse, show great variations. In addition to clearly noticeable concentrations 11, image 20 also shows scattered smaller concentrations and dot-like areas due to background noise. In this example, concentrations 11 illustrate objects, such as cells or particles, with the europium label. When the image is examined, the intensity of fluorescence deriving from the europium label is measured in the field of each object. In the process, the intensity levels of pixels 21 randomly scattered outside the objects cause an error in the measurement result, especially in the immediate vicinity of the objects, unless they can be excluded from the measurement.

The prior art methods have been used in time-resolved, or TR, fluorescence measurements to study digitized images 20 of specimen 10 with long-lived fluoresence, as shown in Figure 1, so that concentrations 11 in the image are segmented, that is delimited, and then measured. When only the intensities of fields within the delimited concentrations are measured, the intensities of random pixels 21 located outside them cannot cause an error in the measurement result.

When the level of fluorescence is high in image 20 according to Figure 1, satisfactory segmentation is possible. If on the other hand, the fluorescence level is low, segmentation, i.e. delimitation, is difficult. It is practically impossible when the intensity of observed fluorescence is close to the detection sensitivity limit of the measuring apparatus.

Figure 2 is a schematic representation of digitized image 22 obtained by means of immediate Prompt fluorescence measurement of specimen 10 emitting short-lived fluorescence. A short-lived specimen refers in this context to a specimen which emits light for a period with a typical duration of a magnitude of nanoseconds (ns = 10⁻⁹ s) or substantially shorter than the emission time of the fluorescence under analysis. In immediate Prompt fluorescence measurement an excitation light pulse is applied to the specimen and the measurement is based on measuring the light emitted by the specimen at the moment of excitation or, in other words, simultaneously with the excitation light pulse. The duration of the excitation light pulse is variable or the excitation light can be continuous, as is the case in prior art devices.

Figure 2 also shows the microscopic image as it is seen in the monitor. For the sake of clarity, the image has been reversed so that fields with higher intensity, i.e. the lighter fields, are shown as darker. In this example, the darker fields, or fields with higher intensities, represent a light emission by objects, such as cellular proteins or particles with a prompt emission label. In other words, concentrations 11 indicate the locations of objects and thus represent fields containing information that the measurements are expected to produce.

On the basis of the method according to the invention, the Prompt fluorescence image 22 presented in Figure 2 is segmented, i.e. delimited, and segmentation is used to study image 20 of long-lived fluorescent specimen 10 obtained by time-resolved, or TR, fluorescence measurement and seen in Figure 1.

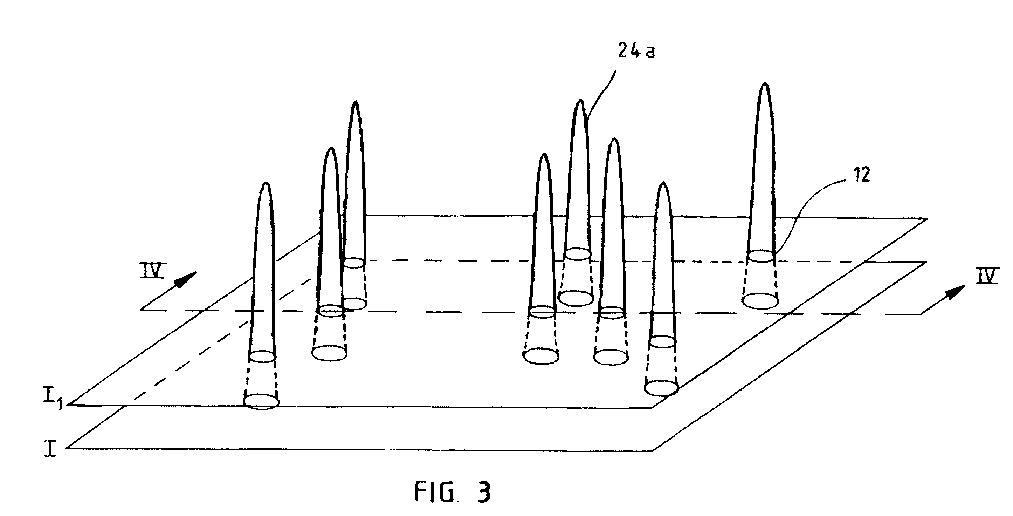

Figure 3 shows the three-dimensional intensity surface presenting the intensity of digitized image 22 of Figure 2. Concentrations 11 in Figure 2 appear in this figure as peaks 24a. The figure has been segmented in such a way that the intensity surface has been cut with plane I, which is parallel to intensity plane I, and the intensity of which is higher than background intensity. The purpose of such segmentation is to find out the locations of objects such as cells or particles that appear as intensity peaks in the figure. When plane I₁ cuts these peaks, circular borderlines 12 are formed at the cutting point. The objects to be located are found inside these lines.

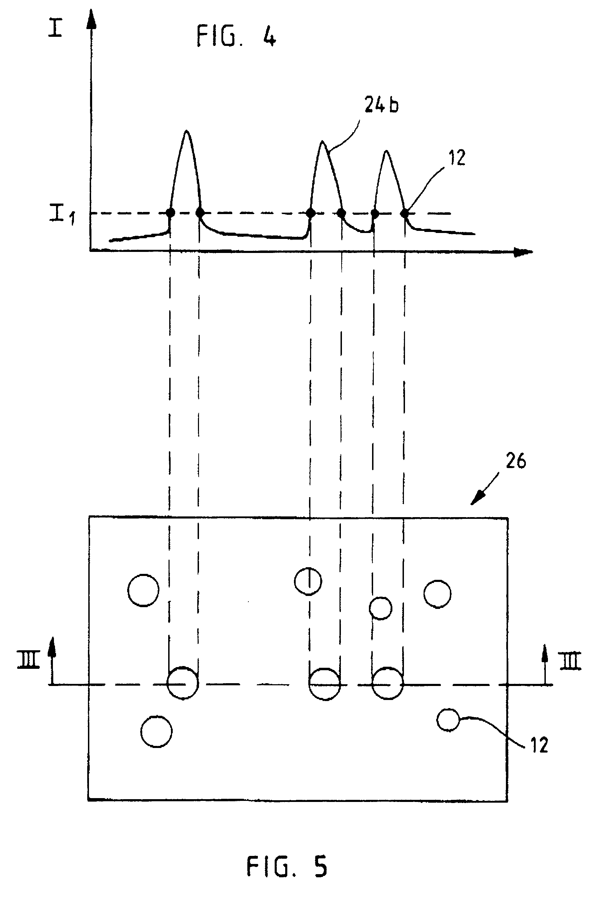

Figure 4 shows a vertical section of Figure 3. The intersection points on the curve 24b where plane I₁ cuts the peak represent the marginal lines of segmentation 12, which are shown in Figure 5. Thus, the locations of objects of importance for the result of the TR measurement have been determined by means of the marginal lines 12.

Now, when image 20 in Figure 1 produced by time-resolved, or TR, fluorescence measurement is compared with image 26 in Figure 5 segmented by Prompt fluorescence measurement, it will be noted that Figure 1 contains a markedly lower number of concentrations 11 than there are delimited fields 12 in Figure 5. This is explained by the fact that the fields in Figure 5 represent locations of objects, such as cells or particles, which have been determined by means of immediate Prompt fluorescence measurement on the basis of light emitted by cellular proteins or particles with a prompt emission label. Fields 12 may represent biological cells or particles, as they do in the sample case, but they may also represent any other field of interest, which is detected in this manner.

As Figure 1 does not show light emitted by cellular proteins or particles with a prompt emission label, but it does show long-lived fluorescence caused by the europium label or another equivalent long-lived labelling agent, concentrations 11 are not equally clear when antibody levels of the object are low.

The figure does not show fluorescence emitted by cellular proteins or particles with a prompt emission label because the image has been obtained after such a long time interval that the rapid excitation state has ended and the light emission caused by their excitation has already ceased. In this case, the time difference is of the magnitude of more than 1 µs. What remains is the light emitted by europium only. In the example, europium labelling has been used to mark and determine the presence of a certain component of interest in the specimen under study. Several labelling agents can be used simultaneously for measurement, in which case they can be distinguished by the colour, i.e. wavelength of emitted light, or duration of fluorescence light.

The above comparison of Figures 1 and 5 shows clearly that reliable segmentation of fields to be measured cannot be carried out on the basis of the image obtained by time-resolved, or TR, fluorescence measurement, shown in Figure 1, because in the sample case the concentration of antibodies in biological cells or accumulated in microparticles can be low. The problem is that the locations of the objects do not appear clearly enough. Therefore, recognition of the fields of interest is not possible on the basis of the image.

The problem is solved according to the invention so that data produced from the TR fluorescence image 20 are evaluated only in those fields which can be localized in Prompt fluorescence image 22 of Figure 2 in the manner shown in Figures 3 and 4. In other words, the intensity of long-lived fluorescence is determined in time-resolved TR fluorescence image 20 from those fields which have been defined by means of the Prompt fluorescence image.

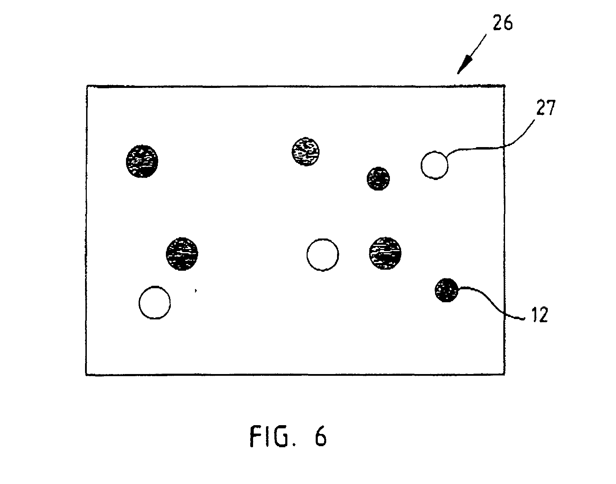

Figure 6 is a schematic representation of the above combination of image information of Figures 1 and 5. In practice, this is done with a computer, in which case both images are obtained one after the other without touching the specimen and without changing the instrument parameters of the measuring apparatus. Instrument parameters are only changed in such a way that the electronic delay unit is adjusted for either Prompt or TR imaging. Digitized image 20, obtained by time-resolved, or TR, fluorescence measurement is transferred to computer nemory, after which the digitized image of short-lived fluorescence specimen 10 obtained by means of Prompt fluorescence measurement is segmented as shown in Figures 3 and 4. Afterwards, image 20 of Figure 1 is analyzed only for the fields shown in image 26 of Figure 5.

Figure 6 shows that when the fields segmented by means of Figure 5 have been analyzed in the image of Figure 1, clear europium concentrations 12 are seen in these fields. However, Figure 6 also includes such objects 27 as cells or particles where the europium label is not to be seen at all. This result could not have been obtained by simple segmentation of Figure 1. In the method presented herein, europium analysis is carried out on the basis of one time-resolved TR image by means of one segmented Prompt image. However, it is also possible to use several images for segmentation. If necessary, segmentation can also be carried out in reverse fashion so that the analysis is limited to areas remaining outside the delimited fields.

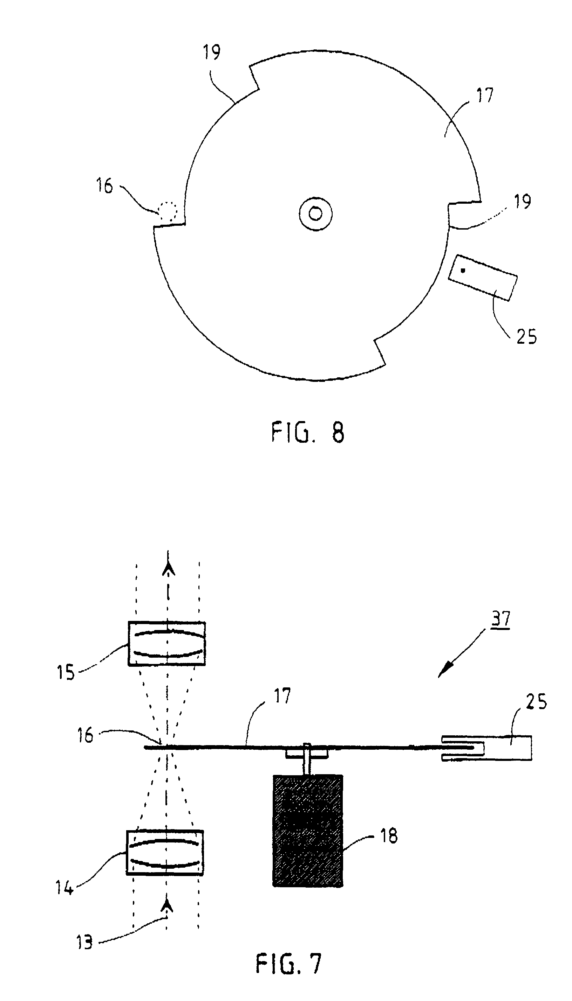

Figure 7 is a schematic representation of the function of a shutter in TR microscopic imaging. Arrow 13 shows the passage of the light emitted by the specimen. The specimen is in the lower part of Figure 7. The image is passed through lenses 14 and 15 so that between them at position 16 the light beam is narrow. The function of the light interrupter, i.e. the shutter, is illustrated by disc 17 in position 16, which is rotated by motor 18. Optimal accuracy of shutter function is achieved by means of the positioning of disc 17 and synchronizing its rotation speed. Naturally, a different type of shutter can also be used.

Figure 8 shows shutter disc 17 of Figure 7, as seen from above. On the perimeter of rotating disc 17 there are openings 19, through which imaging is carried out. Optical, magnetical or mechanical sensor 25 is used to synchronize the imaging. It indicates when the shutter of the camera is open or shut and helps to synchronize the light pulse appropriately in relation to shutter function. In this case, the alternatives include excitation light pulse simultaneously with the shutter open, i.e. Prompt imaging, and time-resolved TR imaging, in which case the shutter is opened after a predetermined time following the excitation light pulse. As the shutter disc rotates, light aperture 19 moves to the position of light beam 16.

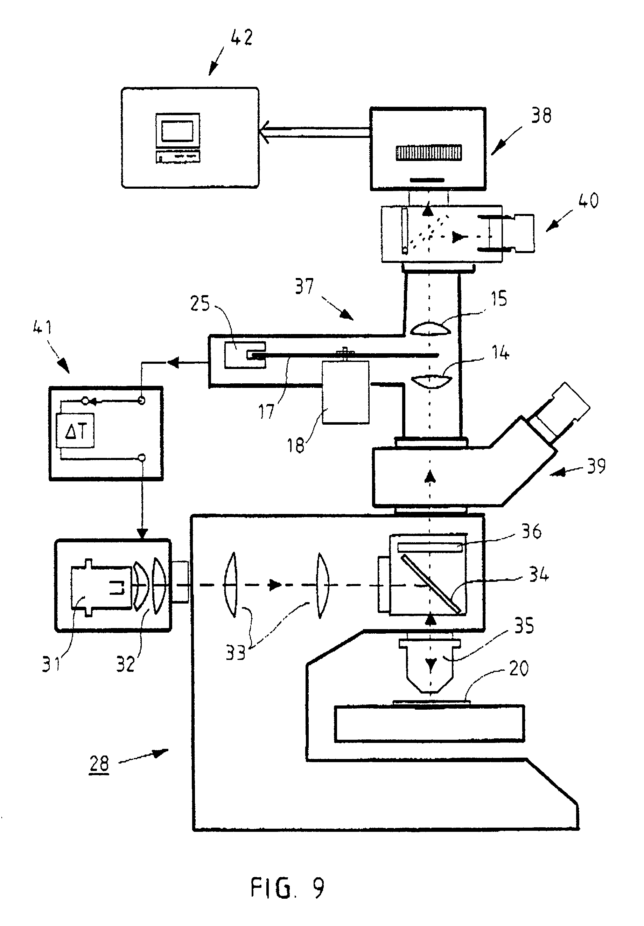

Figure 9 is a schematic side view of microscope 28 used in time-resolved TR fluorescence imaging. It incorporates light source 31, which in this example apparatus is a xenon lamp emitting rapid light pulses. Light is passed through collector lenses 32 and auxiliary lenses 33, known as such, to dichroic mirror 34, from where the light is reflected through objective 35 onto specimen 10.

From specimen 10, luminescence light, the wavelength of which is greater than that of the excitation light, passes back through objective 35 and dichroic mirror 34 for analysis or imaging. The light then passes on through emission filter 36 to shutter 37 and camera 38. Viewing device 39 and eyepiece 40 may be placed between them.

Shutter 37 in this example is comprised of a light interrupter with rotating disc 17 and motor 18, as shown in Figures 7 and 8. Optical sensor 25 of the light interrupter has been connected to light source 31 through an electronic delay unit for the purpose of synchronizing the function of shutter 37 with excitation light pulses. In time-resolved (TR) imaging shutter 37 opens only after the excitation light pulse has ceased.

In this sample case, a Peltier cooled Charge Coupled Device camera 38, or a c-CCD camera, is used for imaging, and the image obtained by the camera is digitized and transferred to computer 42. Other types of camera can also be used for the imaging.

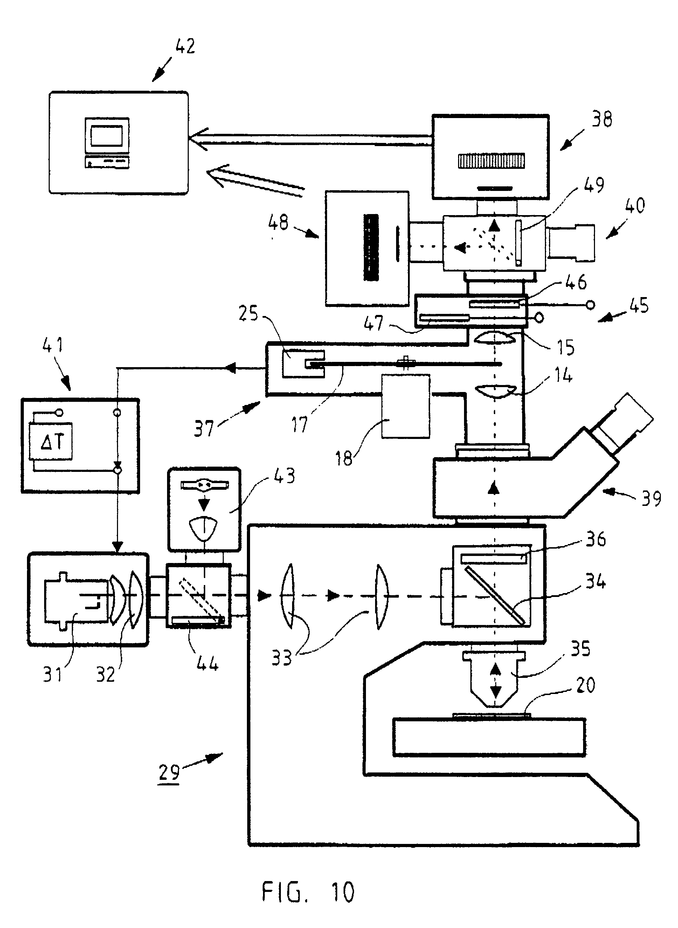

Figure 10 corresponds to Figure 9 and shows microscope 29, which is used for Prompt fluorescence imaging. When xenon lamp 31 is used, electronic delay unit 41 is switched to function without time difference. Prompt fluorescence imaging can also be carried out with a mercury lamp 43, which is connected to the microscope 29 presented in the example. Mirror 44 is employed to select the light source to be used, which may, for example, be either a pulsed xenon lamp 31 or a continuous wave mercury lamp 43.

The basic structure of microscope 29 seen in the sample case of Figure 10 corresponds to that presented in Figure 9, However, there is the difference that between shutter 37 and camera 38 is positioned filter unit 45, which here consists of two filters 46 and 47. There can be many filters, and they can be used optionally as preferred, one at a time or simultaneously in any combinations.

Furthermore, the microscope of Figure 10 has been equipped with a second camera 48 in addition to camera 38. Eyepiece 40 in this case is linked to a turnable mirror 49, which is partially splitting and partially reflectory or fully reflectory. By means of mirror 49, the light emitted by specimen 10 is imaged through lenses alternatively with camera 38 or 48, or, alternatively, simultaneously with both cameras.

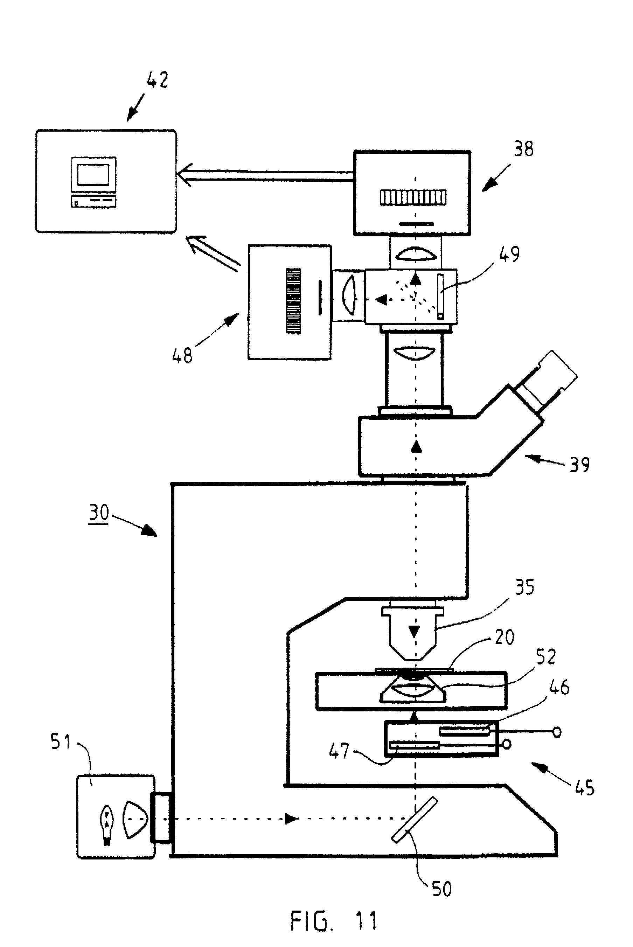

Figure 11 corresponds to Figure 9 and shows microscope 30, which is used for absorption imaging. In this case, sufficient light is provided by a halogen lamp 51, from which light is passed in the conventional manner via mirror 50 and condenser lens 52 through specimen 10. The light then travels through filtering unit 45 to camera 38 or 48 or, alternatively, simultaneously to both cameras. The images obtained by the cameras are digitized and transferred to computer 42.

Mirror 49, shown in figures 10 and 11, located between cameras 38 and 48, may also be a beam splitter that reflects part of the light rays and allows part of the rays to pass through. In this case, imaging can be carried out with both cameras 38 and 48 simultaneously. The image splitting mirror 49 may also be dichroic, in which case different cameras simultaneously image different wavelengths of light. Image splitting can also be carried out using fiberoptics.

With computer 42 it is possible in microscope 29 of Figure 10 to combine in an desired way and to analyze immediate Prompt images and time-resolved TR images from cameras 38 and 48. Thus it is possible to carry out segmenting and to analyze segmented fields in many different ways. Many images can be stored in the computer memory to be used later in the desired manner.

The essential aspect of the method according to the invention and the microscopes used is that the delay unit of the microscope can be regulated by electronic control so that no touching of the specimen, camera or any optic, mechanical, electronic or other components is needed during the imaging process. Thus, measurements can be switched from immediate Prompt imaging to time-resolved TR imaging and vice versa at any time.

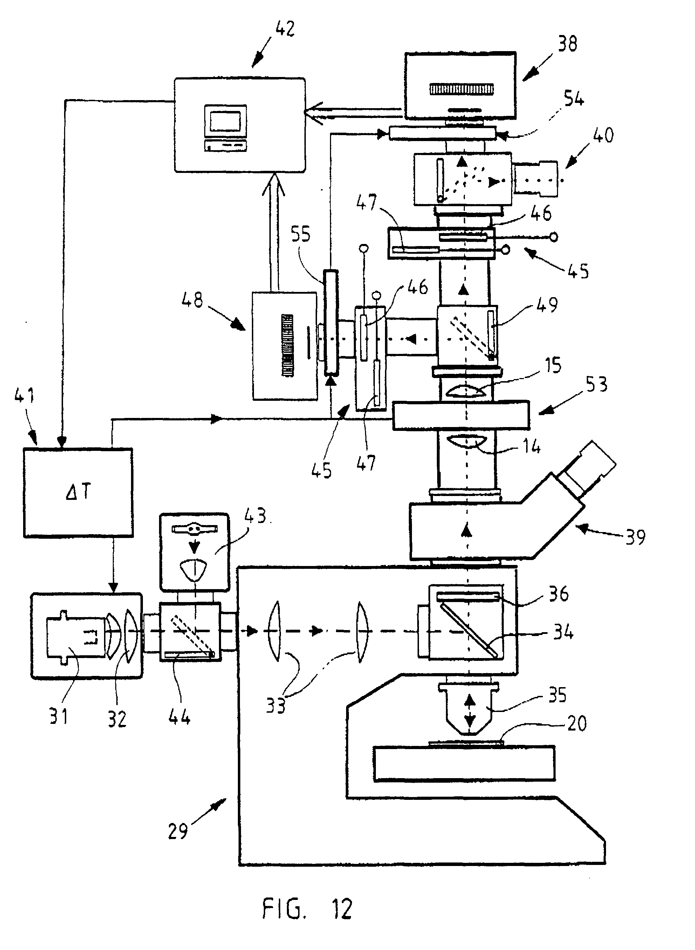

Figure 12 shows a microscope which is suitable for both Prompt and TR imaging, as well as absorption imaging if a light source and a mirror according to Figure 11 are added to the apparatus. Light interrupter 37 of microscope 29, as seen in Figure 10, has been replaced with fast main shutter 53 at an optically advantageous position and with additional shutters 54 and 55 connected to cameras 38 and 48. Of shutters 54 and 55, one or both function simultaneously with main shutter 53 or, if necessary, at different times, in which case several time-resolved channels can be used. Thus, for example, shutters 53, 54 and 55 can be used, after the passage of Prompt fluorescence to the first camera 38 to pass time-resolved TR fluorescence emitted by the same excitation light pulse to camera 48. Both cameras 38 and 48 have separate filtering units 45. Shutters 53, 54 and 55 are controlled by computer 42 and delay unit 41. If shutters 54 and 55 function sufficiently fast, main shutter 53 can also be omitted from the apparatus.

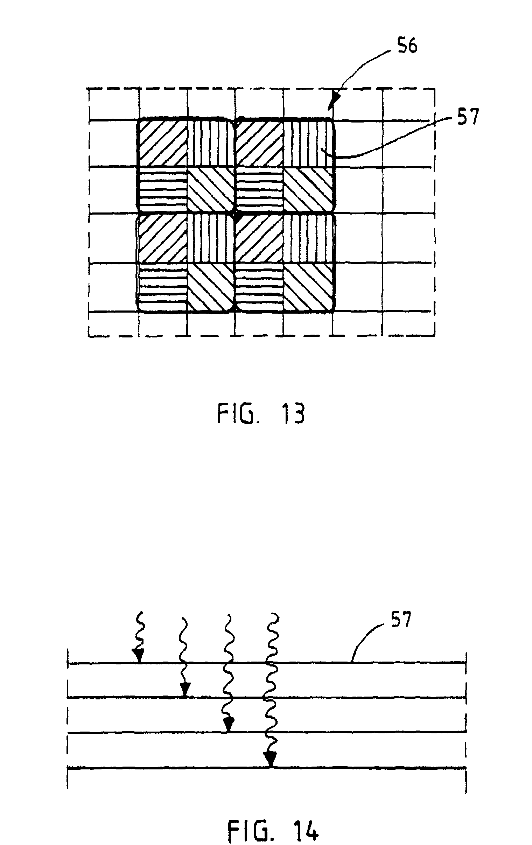

Figure 13 is a schematic representation of the principle of imaging with a parallel detector, which can be used in the microscopes of Figures 9-12. In Figure 13, the imaging surface has been formed of a layer capable of signal separation, such as a semiconductor layer, where the pixel 56 consist of partial pixels 57 of various types in the form of an m x n matrix. In the example of Figure 13, the pixels 56 consist of four square partial pixels 57 in the form of a 2 x 2 matrix, but it is obvious that partial pixels 57 may have other forms as well; for instance, they may be circles. They may also be placed in any configurations within the pixel. If the pixels can be reduced in size, it is natural that the resolution of the image improves with reduction of pixel size.

The resolutions of partial pixels 57 of the same pixel 56 has been specified to differ according to wavelength, intensity or some other property of light. Thus, the information required can be obtained from the entire image field by selecting partial pixel 57 used in pixel 56 and the corresponding pixels in other pixels. In this manner, one or more separate images are obtained in various wavelength bands, either in the Prompt or TR mode. Usually one or several simultaneous Prompt images are obtained. If, however, Prompt and TR luminescence have different wavelengths, one type of partial pixel 57 can be used, for example, for the measurement of Prompt luminescence and another for the measurement of TR luminescence.

Figure 14 shows schematically the imaging principle of a serial detector. In the detector, the image surface has been formed of a layer capable of signal separation, which may comprise layers 57 capable of separation e.g. by wavelength of light, and which can be used to select the information required. It can thus be said that in this embodiment partial pixels 57 are arranged on top of one another.

Structures similar to those in Figures 13 and 14 can also be arranged overlapped or on top of one another so that the structure consists of several structures as shown in Figure 13 or structures of both Figures 13 and 14, in any selected or random order, in which case they together form a new type of shutter structure. Fiberoptics can also be used instead of layer filtering.

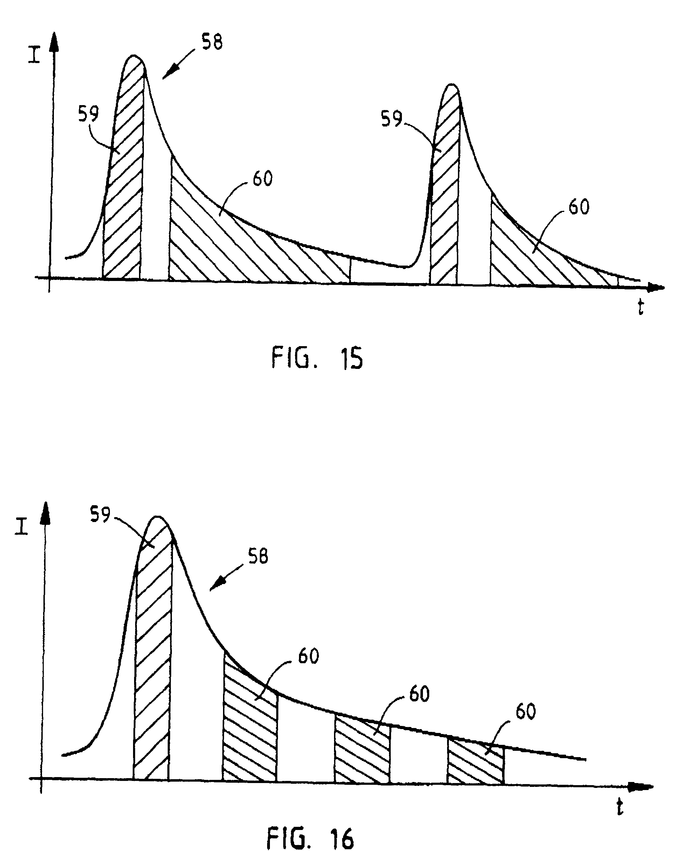

Figure 15 is a schematic representation of the intensity of the luminescence pulse as a function of time and a method for measurement of the pulse. In this method immediate Prompt luminescence 59 and time-resolved TR luminescence 60 are measured for each pulse 58. These data are passed to various channels of the measuring apparatus.

According to the second method presented in Figure 16, for each pulse 58 the necessary amount of immediate Prompt luminescence information 59 and then several measurements of TR luminescence information 60 are obtained and passed to the various channels of the measuring apparatus.

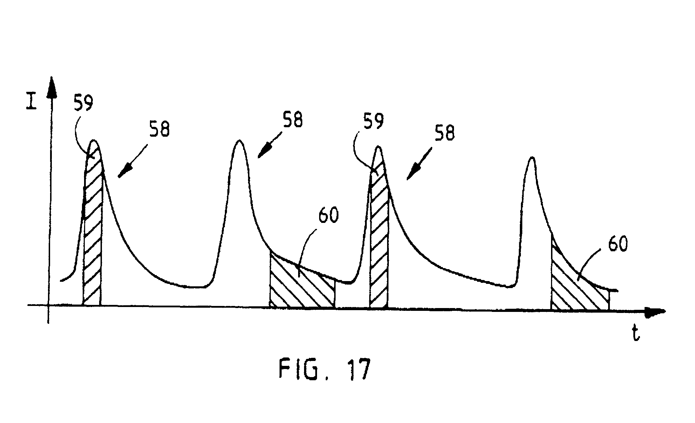

In Figure 17, immediate Prompt luminescence 59 has been measured for every other pulse 58 and TR luminescence 60 for every other pulse. Naturally, the method is not limited to such regularity: any variations and irregularities are possible. Pulses to be measured can be selected in any order required.

Generally speaking, many kinds of analyses can be carried out if required after segmentation. The examples show how intensity is measured, but other types of analysis can also be performed. For example, studies can be made of the numbers of particles within a segmented field or of the texture, i.e. structure, of the specimen. The essential aspect of the method is that the object, such as a cell, is located by means of segmentation, and analysis is carried out on the basis of another image. The advantages of the method are greatest when the specimen has been marked with a time-resolved label.

It is obvious to a person skilled in the art that the different embodiments of the invention may vary within the scope of the claims presented below. Thus, the use of the microscope is not limited to any specific measuring method. Fluorescence, luminescence and other light measuring methods are feasible. Instead of the microscope presented in the drawings the measuring device can also be any other kind of imaging device.

## Claims

1. A method in image analysis for the delimitation of a field (12) in a digitised image (20) of object, in which method the image is observed with an observation instrument, such as a microscope (28, 29, 30), and the image of the object is obtained with a detector, such as a digitising camera (38, 48), **characterised in that**
a) two or more digital images (20) or analogical images which are digitised are obtained of the object to be imaged without changing the position or location of the camera (38, 48) or the object,
b) at least one of the images of step a) is obtained by imaging a different wavelength of light from the other images, or at a different time relative to an excitation event, to the other image or images,
c) at least one differently wavelengthed or timed image of step b) is segmented and the delimitation information so gained used to delimit one or more fields (12) in the image,
d) one or more of the images of step a) that is not segmented as in step c) is analysed using the fields (12) determined in step c).

2. A method as claimed in Claim 1, **characterised in**
- **that** two or more digital images (20) or analogical images to be digitised are obtained of the object to be imaged at desired time intervals, without changing the position or location of the camera (38, 48) or the object,
- **that** segmentation is carried out on the basis of digital delimitation information obtained from at least one image (22),
- and **that** the object to be imaged is analysed on the basis of an image (20) or images different from the one that has been segmented.

3. A method as claimed in Claim 1 or 2, **characterised in that**, with the same detector, such as a camera (38, 48) at least two images are obtained at desired time intervals of which one image (20) is analysed on the basis of delimitation information obtained from another image (22).

4. A method as claimed in Claim 1, 2 or 3,
**characterised in**
- **that** a digital luminescence image (20, 22) is obtained of the object to be imaged using at least two different methods,
- and **that** segmentation and analysis of the object to be imaged are carried out on the basis of images obtained using different methods.

5. A method as claimed in one of Claims 1 to 4,
**characterised in**
- **that** a Prompt digital image (22) and a digital time-resolved image (20) are obtained of the object to be imaged without changing the position or location of the camera (38, 48) or of the object,
- **that** segmentation is carried out on the basis of digital delimitation information obtained by means of the Prompt image (22),
- **that** the analysis of the object to be imaged is carried out from the TR image (20) on the basis of digital delimitation information obtained by means of the Prompt image.

6. A method as claimed in one of Claims 1 to 5,
**characterised in**
- **that** after a time interval following an excitation pulse, a fluorescence microscope (30) is first used to obtain a time-resolved TR fluorescence image, which is digitised and stored in a computer (42) memory,
- **that** subsequently, at least one immediate Prompt fluorescence image is obtained for segmentation, i.e. determination of the fields (12) to be delimited,
- and **that** the fields delimited on the basis of such delimitation information are analysed from the digitised TR fluorescence image which was obtained earlier, and stored in the computer memory.

7. A method as claimed in one of Claims 1 to 5,
**characterised in**
- **that** the fluorescence microscope (30) is first used to obtain at least one immediate Prompt fluorescence image, which is segmented, i.e. where the fields (12) to be delimited are defined, and these data are digitised and stored in the computer (42) memory,
- **that** after a time interval following an excitation pulse, a time-resolved TR fluorescence image is obtained, which is digitised and also stored in the computer (42) memory,
- and **that** the delimitation information is used to analyse the delimited fields of the digitised TR fluorescence image stored in the computer memory.

8. A method as claimed in one of Claims 1 to 7,
**characterised in that** the Prompt image (22) and the TR image (20) are exposed by the same luminescence pulse (58), of which there are one or more.

9. A method as claimed in one of Claims 1 to 7,
**characterised in that** the Prompt image (22) and the TR image (20) are exposed by different luminescence pulses (58), of which there are two or more.

10. A method as claimed in one of Claims 1 to 9,
**characterised in that** at least two Prompt images (22) and/or at least two TR images (20) are exposed by the same luminescence pulse (58).

11. A method as claimed in one of Claims 1 to 10,
**characterised in**
- **that** at least two simultaneous digital images (20) or analogical images to be digitised are obtained of the object to be imaged, without changing the position or location of the camera (38, 48) or the object,
- **that** segmentation is carried out on the basis of digital delimitation information obtained by means of at least one image (22),
- and **that** the object to be imaged is analysed from another image (20), on the basis of the delimitation information obtained.

12. A method as claimed in one of Claims 1 to 11,
**characterised in that** two or more detectors (38, 48), such as cameras, are used to obtain simultaneously or at desired time intervals two or more images, of which at least one is analysed on the basis of delimitation information obtained from the other image or other images.

13. A method as claimed in one of Claims 1 to 12,
**characterised in**
- **that** at least two simultaneous digital Prompt images (22), the information of which is distinguished one from the other, for example, on the basis of the wavelength of light, are obtained of the object to be imaged, without changing the position or location of the camera (38, 48) or the object,
- **that** segmentation is carried out on the basis of digital delimitation information obtained from at least one Prompt image (22),
- and **that** analysis of the object to be imaged is carried out on the basis of another Prompt image (20).

14. A method as claimed in one of Claims 1 to 13,
**characterised in that** the determination of light intensity, number of particles or other analysis of one image (20) is carried out on the basis of delimitation information obtained from another image (22) or other images.

15. A method as claimed in one of Claims 1 to 14,
**characterised in that** a microscope (30) and one or more cameras (38, 48) are used to image light emission from the object to be imaged caused by two or more excitation events, such as an excitation light pulse, so
- that at least two images are obtained of luminescence caused by the excitation light pulse at desired time intervals with one or more detectors,
- and that in one image (20) a read-out of light intensity is obtained for at least one delimited field (12) on the basis of delimitation information obtained from another image (22) or other images.

16. Apparatus used in image analysis for the delimitation of at least one field (12) in a first image (20) of an object (19) including an observation instrument, such as a microscope (28, 29, 30), at least one detector means (38, 48), such as a camera, and an analysing unit (42),
**characterised in that** the apparatus includes a device (37, 41, 49) that transmits at least part of a second image (22) of the object (19) differing from the first image in time or wavelength but without change of the position or location of the detector means (38, 48) or the object (19) to one or more detector means and via those means to the analysing unit (42), and the analysing unit (42) is constructed to segment the second image (22) to delimit at least one field (12) in the second image (22), and then to analyse the first image (20) using the delimited field(s) (12) obtained by segmentation of the second image (22).

17. An apparatus as claimed in Claim 16, **characterised in that** the apparatus incorporates a microscope (28, 29, 30), at least one camera (38, 48) and an electronic delay unit (41) which can be regulated to obtain both immediate Prompt images and time-resolved TR images, and an analysing unit (42), which on the basis of at least one image (22) delimits at least one field (12) in the object and, on the basis of delimitation information, targets at least one delimited field in another image for image analysis.

18. An apparatus as claimed in Claim 16 or 17,
**characterised in that** the apparatus is equipped with a fast shutter (37), such as a gatable image intensifier, and a camera or, alternatively, a position-sensitive photodetector, the digital output port of which can be gated so that the same detector can be used to measure both the image information of Prompt luminescence and time-resolved luminescence.

19. An apparatus as claimed in Claim 16 or 17,
**characterised in that** the apparatus incorporates a fluorescence microscope (28), at least one camera (38, 48) and a computer (42), in the memory of which can store a digitised, time-resolved TR fluorescence image which has been obtained with a fluorescence microscope after a time interval following an excitation pulse, and which computer has also been equipped for analysis of a Prompt fluorescence image which is used to define the fields (12) to be delimited, i.e. a segmentation image, and the delimitation information obtained in this manner is used to analyse the fields delimited in the digitised TR fluorescence image in the computer memory.

20. An apparatus as claimed in Claim 16, 17 or 18,
**characterised in that** a fluorescence microscope (28), at least one camera (38, 48) and a computer (42), in the memory of which can store a conventional, or immediate, Prompt fluorescence image which is used to define the fields (12) to be delimited, i.e. segmentation, and a digitised, time-resolved TR fluorescence image which has been obtained with a fluorescence microscope after a time interval following an excitation pulse, which computer has been equipped for analysis, on the basis of the delimitation information obtained, of fields delimited in the digitised TR fluorescence image stored in the computer memory.

21. An apparatus as claimed in one of Claims 16 to 20,
**characterised in that** the apparatus incorporates a camera (38, 48) and a filter unit (45) with at least two changeable filters (46, 47), which make it possible to obtain two or more filtered images taken at desired time intervals.

22. An apparatus as claimed in any of Claims 16 to 21,
**characterised in that** the apparatus incorporates a camera (38, 48), to which at least one optical path has been directed, and that in the camera is located a filtering unit (45) which has two or more layers (57), these being semiconductor layers or other layers capable of separation function and through which imaging can be carried out simultaneously or at desired time intervals, using at least two different modes of filtering.

23. An apparatus as claimed in one of Claims 16 to 21,
**characterised in that** the apparatus incorporates a camera (38, 48), to which at least one optical path has been directed, and that in or outside the camera is located a filtering unit (45) which comprises spatial filters (57), such as a matrix (56), which unit provides spatially different filtering functions enabling imaging by at least two different modes of filtering.

24. An apparatus as claimed in one of Claims 21 to 23,
**characterised in that** the layers forming the filtering unit (45) are parallel and/or on top of one another.

25. An apparatus as claimed in one of Claims 16 to 24,
**characterised in that** the apparatus incorporates a microscope (28, 29, 30), at least two cameras (38, 48) and a device (37, 41, 49) that directs at least part of the light flux to one camera (38) and part of the image information to another camera (48), and an analysing unit (42), which on the basis of at least one image (22) delimits at least one field (12), and on the basis of delimitation information, targets at least one delimited field in another image for image analysis.

26. An apparatus as claimed in one of Claims 16 to 25,
**characterised in that** the apparatus incorporates two cameras (38, 48) and a beam splitter (49), which splits the image information obtained from the object into two parts for the cameras, and that at least one camera is equipped with a fast shutter (37), such as a gatable image intensifier, and a camera or alternatively a position-sensitive photodetector with a gatable digital output port.

27. An apparatus as claimed in one of Claims 16 to 26,
**characterised in that** the apparatus incorporates a camera (38, 48) which can be reset to zero on the basis of immediate, or prompt, luminescence image information and opened to measure time-resolved TR luminescence emitted by the same excitation light pulse.

## Patentansprüche

1. Verfahren bei der Bildanalyse zum Abgrenzen eines Feldes (12) in einem digitalisierten Bild (20) eines Objekts, wobei in dem Verfahren das Bild mit einem Beobachtungsinstrument, z.B. einem Mikroskop (28, 29, 30), beobachtet und das Bild des Objekts mit einem Detektor, z.B. mit einer Digitalkamera (38, 48), erhalten wird, **dadurch gekennzeichnet, daß**
a) zwei oder mehr digitale Bilder (20) oder analoge Bilder, die digitalisiert sind, von dem abzubildenden Objekt ohne Ändern der Position oder des Orts der Kamera (38, 48) oder des Objekts erhalten werden,
b) mindestens eines der Bilder der Stufe a) durch Abbilden einer unterschiedlichen Lichtwellenlänge von den anderen Bildern oder zu einer unterschiedlichen Zeit bezüglich eines Anregungsvorgangs auf das andere Bild oder die anderen Bilder erhalten wird,
c) mindestens ein Bild mit unterschiedlicher Wellenlänge oder unterschiedlicher Zeit der Stufe b) segmentiert und die so gewonnene Abgrenzungsinformation benutzt wird, um ein oder mehrere Felder (12) in dem Bild abzugrenzen, und
d) ein oder mehr Bilder der Stufe a), die nicht wie in der Stufe c) segmentiert werden, unter Verwendung der in der Stufe c) bestimmten Felder (12) analysiert wird.

2. Verfahren nach Anspruch 1, **dadurch gekennzeichnet,**
- **daß** zwei oder mehr digitale Bilder (20) oder zu digitalisierende analoge Bilder von dem abzubildenden Objekt zu gewünschten Zeitabständen erhalten werden, ohne die Position oder den Ort der Kamera (38, 48) oder des Objekts zu verändern,
- **daß** die Segmentierung auf der Basis der Information der digitalen Abgrenzung durchgeführt wird, wobei die Information von mindestens einem Bild (22) erhalten wird, und
- **daß** das abzubildende Objekt auf der Basis eines Bildes (20) oder von Bildern, die von jenem verschieden sind, das segmentiert worden ist, analysiert wird.

3. Verfahren nach Anspruch 1 oder 2, **dadurch gekennzeichnet, daß** mit demselben Detektor, z.B. einer Kamera (38, 48) mindestens zwei Bilder in gewünschten Zeitabständen erhalten werden, von denen ein Bild (20) auf der Basis der von einem anderen Bild (22) erhaltenen Abgrenzungsinformation analysiert wird.

4. Verfahren nach Anspruch 1, 2 oder 3, **dadurch gekennzeichnet,**
- **daß** von dem abzubildenden Objekt unter Anwendung von mindestens zwei verschiedenen Methoden ein digitales Lumineszenzbild (20, 22) erhalten wird, und
- **daß** die Segmentierung und die Analyse des abzubildenden Objekts auf der Basis von Bildern durchgeführt werden, die unter Verwendung verschiedener Methoden erhalten worden sind.

5. Verfahren nach einem der Ansprüche 1 bis 4, **dadurch gekennzeichnet,**
- **daß** ein digitales Promptbild (22) und ein digitales zeitaufgelöstes Bild (20) von dem abzubildenden Objekt erhalten werden, ohne die Position oder den Ort der Kamera (38, 48) oder des Objekts zu ändern,
- **daß** die Segmentierung auf der Basis der mittels des Promptbildes (22) erhaltenen Information der digitalen Abgrenzung durchgeführt wird und
- **daß** die Analyse des abzubildenden Objekts auf der Basis der mittels des Promptbildes erhaltenen Information der digitalen Abgrenzung von dem TR-Bild (20) aus durchgeführt wird.

6. Verfahren nach einem der Ansprüche 1 bis 5, **dadurch gekennzeichnet,**
- **daß** nach einem Zeitabstand im Anschluß an einen Anregungsimpuls zuerst ein Fluoreszenzmikroskop (30) benutzt wird, um ein zeitaufgelöstes TR-Fluoreszenzbild zu erhalten, das digitalisiert und in einem Speicher eines Computers (42) gespeichert wird,
- **daß** nachfolgend zur Segmentierung, d.h. zur Bestimmung der abzugrenzenden Felder (12), mindestens ein unmittelbares Promptfluoreszenzbild, erhalten wird, und
- **daß** die Felder, die auf der Grundlage einer solchen Abgrenzungsinformation abgegrenzt sind, von dem digitalisierten TR-Fluoreszenzbild aus analysiert werden, das früher erhalten worden ist, und in dem Computerspeicher gespeichert werden.

7. Verfahren nach einem der Ansprüche 1 bis 5, **dadurch gekennzeichnet,**
- **daß** das Fluoreszenzmikroskop (30) zuerst benutzt wird, um mindestens ein unmittelbares Promptfluoreszenzbild zu erhalten, das segmentiert wird, das heißt, wo die abzugrenzenden Felder (12) definiert sind, und diese Daten digitalisiert und in dem Speicher des Computers (42) gespeichert werden,
- **daß** nach einem Zeitabstand im Anschluß an einen Anregungsimpuls ein zeitaufgelöstes TR-Fluoreszenzbild erhalten wird, das digitalisiert und auch in dem Speicher des Computers (42) gespeichert wird, und
- **daß** die Abgrenzungsinformation zum Analysieren der abgegrenzten Felder des digitalisierten TR-Fluoreszenzbildes, das in dem Computerspeicher gespeichert ist, benutzt wird.

8. Verfahren nach einem der Ansprüche 1 bis 7, **dadurch gekennzeichnet, daß** das Promptbild (22) und das TR-Bild (20) durch denselben Lumiszenzimpuls (58) belichtet werden, von dem es einen oder mehrere gibt.

9. Verfahren nach einem der Ansprüche 1 bis 7, **dadurch gekennzeichnet, daß** das Promptbild (22) und das TR-Bild (20) durch verschiedene Lumineszenzimpulse (58) belichtet werden, von denen es zwei oder mehr gibt.

10. Verfahren nach einem der Ansprüche 1 bis 9, **dadurch gekennzeichnet, daß** mindestens zwei Promptbilder (22) und/oder mindestens zwei TR-Bilder (20) durch denselben Lumeniszenzimpuls (58) belichtet werden.

11. Verfahren nach einem der Ansprüche 1 bis 10, **dadurch gekennzeichnet,**
- **daß** mindestens zwei simultane digitale Bilder (20) oder zu digitalisierende analoge Bilder von dem abzubildenden Objekt erhalten werden, ohne die Position oder den Ort der Kamera (38, 48) oder des Objekts zu ändern,
- **daß** die Segmentierung auf der Basis der mittels mindestens eines Bildes (22) erhaltenen Information der digitalen Abgrenzung durchgeführt wird, und
- **daß** das abzubildende Objekt auf der Basis der erhaltenen Abgrenzungsinformation von einem anderen Bild (20) aus analysiert wird.

12. Verfahren nach einem der Ansprüche 1 bis 11, **dadurch gekennzeichnet, daß** zwei oder mehr Detektoren (38, 48), z.B. Kameras, benutzt werden, um gleichzeitig oder in gewünschten Zeitabständen zwei oder mehr Bilder zu erhalten, von denen mindestens eines auf der Basis der Abgrenzungsinformation analysiert wird, die von dem anderen Bild oder den anderen Bildern erhalten wurde.

13. Verfahren nach einem der Ansprüche 1 bis 12, **dadurch gekennzeichnet,**
- **daß** ohne Ändern der Position oder des Orts der Kamera (38, 48) oder des Objekts von dem abzubildenden Objekt mindestens zwei simultane digitale Promptbilder (22) erhalten werden, deren Informationen sich voneinander unterscheiden, z.B. auf der Basis der Lichtwellenlänge,
- **daß** die Segmentierung auf der Basis der von mindestens einem Promptbild (22) erhaltenen Information der digitalen Abgrenzung durchgeführt wird und
- **daß** die Analyse des abzubildenden Objekts auf der Basis des anderen Promptbildes (20) durchgeführt wird.

14. Verfahren nach einem der Ansprüche 1 bis 13, **dadurch gekennzeichnet, daß** die Bestimmung der Lichtintensität, der Anzahl der Teilchen oder eine andere Analyse eines Bildes (20) auf der Basis der von einem anderen Bild (22) oder anderen Bildern erhaltenen Abgrenzungsinformation durchgeführt wird.

15. Verfahren nach einem der Ansprüche 1 bis 14, **dadurch gekennzeichnet, daß** ein Mikroskop (30) und eine oder mehrere Kameras (38, 48) benutzt werden, um eine Lichtemission von dem abzubildenden Objekt abzubilden, die durch zwei oder mehr Anregungsvorgänge, z.B. einen Anregungslichtimpuls, verursacht worden ist, derart,
- daß mindestens zwei Bilder von Lumineszenz erhalten werden, die durch den Anregungslichtimpuls in den gewünschten Zeitabständen mit einem oder mehreren Detektoren verursacht worden ist, und
- daß in einem Bild (20) für mindestens ein abgegrenztes Feld (12) auf der Basis der Abgrenzungsinformation, die von einem anderen Bild (22) oder anderen Bildern erhalten worden ist, ein Auslesen der Lichtintensität erhalten wird.

16. Vorrichtung, die bei der Bildanalyse für die Abgrenzung von mindestens einem Feld (12) in einem ersten Bild (20) eines Objekts (19) verwendet wird, wobei die Vorrichtung ein Beobachtungsinstrument, z.B. ein Mikroskop (28, 29, 30), mindestens einen Detektor (38, 48), z.B. eine Kamera, und eine Analysiereinheit (42) aufweist, **dadurch gekennzeichnet, daß** die Vorrichtung eine Einrichtung (37, 41, 49) beinhaltet, die mindestens einen Teil eines zweiten Bildes (22) des Objekts (19), das sich von dem ersten Bild hinsichtlich der Zeit oder der Wellenlänge unterscheidet, ohne Ändern der Position oder des Orts des Detektors (38, 48) oder des Objekts (19) auf einen oder mehrere Detektoren und über jene Mittel zu der Analysiereinheit (42) überträgt sowie die Analysiereinheit (42) derart konstruiert ist, daß sie das zweite Bild (22) segmentiert, um mindestens ein Feld (12) in dem zweiten Bild (22) abzugrenzen und dann das erste Bild (20) unter Verwendung des abgegrenzten Felds (12) oder der abgegrenzten Felder (12) zu analysieren, das bzw. die durch Segmentieren des zweiten Bilds (22) erhalten wurde(n).

17. Vorrichtung nach Anspruch 16, **dadurch gekennzeichnet, daß** sie ein Mikroskop (28, 29, 30), mindestens eine Kamera (38, 48) und eine elektronische Verzögerungseinheit (41), die so eingestellt werden kann, daß sowohl unmittelbare Promptbilder als auch zeitaufgelöste PR-Bilder erhalten werden können, und eine Analysiereinheit (42) aufweist, die auf der Basis mindestens eines Bildes (22) mindestens ein Feld (12) in dem Objekt abgrenzt und auf der Basis der Abgrenzungsinformation auf mindestens ein abgegrenztes Feld in einem anderen Bild zur Bildanalyse abzielt.

18. Vorrichtung nach Anspruch 16 oder 17, **dadurch gekennzeichnet, daß** sie mit einem Schnellverschluß (37), z.B. einem abblendbaren Bildverstärker, und einer Kamera oder alternativ einem positionsempfindlichen Photodetektor ausgerüstet ist, dessen digitaler Ausgang derart abgeblendet werden kann, daß der gleiche Detektor zum Messen sowohl der Bildinformation einer Promptlumineszenz als auch einer zeitaufgelösten Lumineszenz verwendet werden kann.

19. Vorrichtung nach Anspruch 16 oder 17, **dadurch gekennzeichnet, daß** sie ein Fluoreszenzmikroskop (28), mindestens eine Kamera (38, 48) und einen Computer (42) aufweist, in dessen Speicher ein digitalisiertes, zeitaufgelöstes TR-Fluoreszezbild gespeichert werden kann, das mit einem Fluoreszenzmikroskop nach einem Zeitabstand im Anschluß an einen Anregungsimpuls erhalten worden ist, wobei der Computer auch für eine Analyse eines Promptfluoreszenzbildes ausgerüstet ist, das benutzt wird, um die abzugrenzenden Felder (12) zu definieren, d.h. eines Segmentierungsbildes, und wobei die auf diese Weise erhaltene Abgrenzungsinformation verwendet wird, um die in dem digitalisierten TR-Fluoreszenzbild in dem Computerspeicher abgegrenzten Felder zu analysieren.

20. Vorrichtung nach Anspruch 16, 17 oder 18, **dadurch gekennzeichnet, daß** ein Fluoreszenzmikroskop (28), mindestens eine Kamera (38, 48) und ein Computer (42) vorgesehen sind, in dessen Speicher ein konventionelles oder unmittelbares Promptfluoreszenzbild gespeichert werden kann, das benutzt wird, um die abzugrenzenden Felder (12), d.h. die Segmentierung, zu definieren, und ein digitalisiertes, zeitaufgelöstes TR-Fluoreszenzbild gespeichert werden kann, das mittels eines Fluoreszenzmikroskops nach einem Zeitabstand im Anschluß an einen Anregungsimpuls erhalten worden ist, wobei der Computer für eine Analyse, auf der Basis der erhaltenen Abgrenzungsinformation, von Feldern ausgerüstet ist, die in dem digitalisierten TR-Fluoreszenzbild abgegrenzt sind, das in dem Computerspeicher gespeichert ist.

21. Vorrichtung nach einem der Ansprüche 16 bis 20, **dadurch gekennzeichnet, daß** sie eine Kamera (38, 48) und eine Filtereinheit (45) mit mindestens zwei änderbaren Filtern (46, 47) aufweist, die es ermöglichen, zwei oder mehr gefilterte Bilder, die in gewünschten Zeitabständen gemacht worden sind, zu erhalten.

22. Vorrichtung nach einem der Ansprüche 16 bis 21, **dadurch gekennzeichnet, daß** sie eine Kamera (38, 48) aufweist, zu der mindestens ein optischer Weg gerichtet ist, und daß sich in der Kamera eine Filtereinheit (45) befindet, die mit zwei oder mehr Schichten (57)ausgerüstet ist, die Halbleiterschichten oder andere Schichten sind, die eine Trennfunktion haben und durch die hindurch gleichzeitig oder in bestimmten Zeitabständen ein Abbilden erfolgen kann, wobei mindestens zwei verschiedene Arten des Filterns verwendet werden.

23. Vorrichtung nach einem der Ansprüche 16 bis 21, **dadurch gekennzeichnet, daß** sie eine Kamera (38, 48) aufweist, zu der mindestens ein optischer Weg gerichtet ist, und daß innerhalb oder außerhalb der Kamera eine Filtereinheit (45) angeordnet ist, die Raumfilter (57), z.B. eine Matrix (56), enthält und räumlich verschiedene Filterfunktionen bietet, die ein Abbilden durch mindestens zwei verschiedene Arten des Filterns ermöglichen.

24. Vorrichtung nach einem der Ansprüche 21 bis 23, **dadurch gekennzeichnet, daß** die die Filtereinheit (45) bildenden Schichten parallel und/oder übereinander angeordnet sind.

25. Vorrichtung nach einem der Ansprüche 16 bis 24, **dadurch gekennzeichnet, daß** sie ein Mikroskop (28, 29, 30), mindestens zwei Kameras (38, 48), eine Einrichtung (37, 41, 49), die mindestens einen Teil des Lichtflusses zu einer Kamera (38) und einen Teil der Bildinformation zu einer anderen Kamera (48) lenkt, und eine Analysiereinheit (42) aufweist, die auf der Basis mindestens eines Bildes (22) mindestens ein Feld (12) abgrenzt und auf der Basis der Abgrenzungsinformation auf mindestens ein abgegrenztes Feld in einem Bild für die Bildanalyse abzielt.

26. Vorrichtung nach einem der Ansprüche 16 bis 25, **dadurch gekennzeichnet, daß** sie zwei Kameras (38, 48) und einen Strahlenteiler (49) aufweist, der die von dem Objekt erhaltene Bildinformation für die Kameras in zwei Teile aufteilt, und daß mindestens eine Kamera mit einem Schnellverschluß (37), z.B. mit einem abblendbaren Bildverstärker, ausgerüstet ist und daß die Vorrichtung eine Kamera oder alternativ einen positionsempfindlichen Photodetektor mit einem abblendbaren Digitalausgang aufweist.

27. Vorrichtung nach einem der Ansprüche 16 bis 26, **dadurch gekennzeichnet, daß** sie eine Kamera (38, 48) aufweist, die auf der Basis einer Information eines unmittelbaren oder prompten Lumineszenzbildes auf Null zurückgestellt und geöffnet werden kann, um eine zeitaufgelöste TR-Lumineszenz zu messen, welche durch denselben Anregungslichtimpuls emittiert worden ist.

## Revendications

1. Procédé en analyse d'image destiné à la délimitation d'un champ (12) dans une image numérisée (20) d'un objet, procédé dans lequel l'image est observée au moyen d'un instrument d'observation, tel qu'un microscope (28, 29, 30), et l'image de l'objet est obtenue au moyen d'un détecteur, tel qu'un appareil de prise de vues de numérisation (38, 48), **caractérisé en ce que**
(a) deux ou plusieurs images numériques (20) ou images analogiques qui sont numérisées de l'objet devant être formé en image sont obtenues sans changer la position ou l'emplacement de l'appareil de prise de vues (38, 48) ou de l'objet,
(b) au moins l'une des images de l'étape a) est obtenue en formant en image une longueur d'onde différente de lumière par rapport aux autres images, ou à un instant différent par rapport à un événement d'excitation, par rapport à l'autre image ou aux autres images,
(c) au moins une image de l'étape b) à une longueur d'onde différente ou à un instant différent est segmentée, et des informations de délimitation ainsi obtenues sont utilisées pour délimiter un ou plusieurs champs (12) dans l'image,
(d) une ou plusieurs des images de l'étape a) qui ne sont pas segmentées comme dans l'étape c) sont analysées en utilisant les champs (12) déterminés à l'étape c).

2. Procédé selon la revendication 1, **caractérisé**
- **en ce que** deux ou plusieurs images numériques (20) ou images analogiques devant être numérisées de l'objet devant être formé en image sont obtenues à des intervalles de temps souhaités, sans changer la position ou l'emplacement de l'appareil de prise de vues (38, 48) ou de l'objet,
- **en ce que** la segmentation est exécutée sur la base des informations numériques de délimitation obtenues à partir d'au moins une image (22),
- **en ce que** l'objet devant être formé en image est analysé sur la base d'une image (20) ou d'images différentes de celle qui a été segmentée.

3. Procédé selon la revendication 1 ou 2, **caractérisé en ce que**, avec le même détecteur, tel qu'un appareil de prise de vues (38, 48), au moins deux images sont obtenues à des intervalles de temps souhaités, parmi lesquelles une image (20) est analysée sur la base des informations de délimitation obtenues à partir d'une autre image (22).

4. Procédé selon la revendication 1, 2 ou 3, **caractérisé**
- **en ce qu'**une image numérique de luminescence (20, 22) de l'objet devant être formé en image est obtenue en utilisant au moins deux procédés différents,
- et **en ce qu'**une segmentation et une analyse de l'objet devant être formé en image sont exécutées sur la base des images obtenues en utilisant des procédés différents.

5. Procédé selon l'une des revendications 1 à 4, **caractérisé**
- **en ce qu'**une image numériqtie instantanée (22) et une image numérique à définition temporelle (20) de l'objet devant être formé en image sont obtenues sans changer la position ou l'emplacement de l'appareil de prise de vues (38, 48) ou de l'objet,
- **en ce qu'**une segmentation est exécutée sur la base des informations numériques de délimitation obtenues au moyen de l'image instantanée (22),
- **en ce que** l'analyse de l'objet devant être formé en image est exécutée à partir de l'image TR (20) sur la base des informations numériques de délimitation obtenues au moyen de l'image instantanée.

6. Procédé selon l'une des revendications 1 à 5, **caractérisé**
- **en ce qu'**après un intervalle de temps suivant une impulsion d'excitation, un microscope à fluorescence (30) est tout d'abord utilisé afin d'obtenir une image de fluorescence TR à définition temporelle, qui est numérisée et mémorisée dans une mémoire d'ordinateur (42),
- **en ce qu'**ensuite, au moins une image de fluorescence instantanée immédiate est obtenue en vue d'une segmentation, c'est-à-dire une détermination des champs (12) devant être délimités,
- et **en ce que** les champs délimités sur la base de telles informations de délimitation sont analysés à partir de l'image de fluorescence TR numérisée qui a été obtenue antérieurement, et mémorisée dans la mémoire d'ordinateur.

7. Procédé selon l'une des revendications 1 à 5, **caractérisé**
- **en ce que** le microscope à fluorescence (30) est tout d'abord utilisé pour obtenir au moins une image de fluorescence instantanée immédiate, qui est segmentée, c'est-à-dire où les champs (12) devant être délimités sont définis, et ces données sont numérisées et mémorisées dans la mémoire d'ordinateur (42),
- **en ce qu'**après un intervalle de temps suivant une impulsion d'excitation, une image de fluorescence TR à définition temporelle est obtenue, laquelle est numérisée et également mémorisée dans la mémoire d'ordinateur (42),
- et **en ce que** les informations de délimitation sont utilisées pour analyser les champs délimités de l'image de fluorescence TR numérisée mémorisée dans la mémoire d'ordinateur.

8. Procédé selon l'une des revendications 1 à 7, **caractérisé en ce que** l'image instantanée (22) et l'image TR (20) sont exposées par la même impulsion de luminescence (58), dont il en existe une ou plusieurs.

9. Procédé selon l'une des revendications 1 à 7, **caractérisé en ce que** l'image instantanée (22) et l'image TR (20) sont exposées par des impulsions de luminescence différentes (58), dont il en existe deux ou plusieurs.

10. Procédé selon l'une des revendications 1 à 9, **caractérisé en ce qu'**au moins deux images instantanées (22) et/ou au moins deux images TR (20) sont exposées par la même impulsion de luminescence (58).

11. Procédé selon l'une des revendications 1 à 10, **caractérisé**
- **en ce qu'**au moins deux images numériques simultanées (20) ou images analogiques devant être numérisées de l'objet devant être formé en image sont obtenues sans changer la position ou l'emplacement de l'appareil de prise de vues (38, 48) ou de l'objet,
- **en ce qu'**une segmentation est exécutée sur la base des informations numériques de délimitation obtenues au moyen d'au moins une image (22),
- et **en ce que** l'objet devant être formé en image est analysé à partir d'une autre image (20), sur la base des informations de délimitation obtenues.

12. Procédé selon l'une des revendications 1 à 11, **caractérisé en ce que** deux ou plusieurs détecteurs (38, 48), tels que des appareils de prise de vues, sont utilisés afin d'obtenir simultanément ou à des intervalles de temps souhaités deux ou plusieurs images, dont au moins une est analysée sur la base des informations de délimitation obtenues à partir de l'autre image ou des autres images.

13. Procédé selon l'une des revendications 1 à 12, **caractérisé**
- **en ce qu'**au moins deux images instantanées numériques simultanées (22), dont on fait la distinction des informations de l'une par rapport à l'autre, par exemple, sur la base de la longueur d'onde de la lumière, de l'objet devant être formé en image sont obtenues sans changer la position ou l'emplacement de l'appareil de prise de vues (38, 48) ou de l'objet,
- **en ce qu'**une segmentation est exécutée sur la base des informations numériques de délimitation obtenues à partir d'au moins une image instantanée (22),
- et **en ce qu'**une analyse de l'objet devant être formé en image est exécutée sur la base d'une autre image instantanée (20).

14. Procédé selon Tune des revendications 1 à 13, **caractérisé en ce que** la détermination de l'intensité lumineuse, du nombre de particules ou une autre analyse d'une image (20) sont exécutées sur la base des informations de délimitation obtenues à partir d'une autre image (22) ou d'autres images.

15. Procédé selon l'une des revendications 1 à 14, **caractérisé en ce qu'**un microscope (30) et un ou plusieurs appareils de prise de vues (38, 48) sont utilisés afin de former en image l'émission lumineuse provenant de l'objet devant être formé en image provoquée par deux ou plusieurs événements d'excitation, par exemple une impulsion lumineuse d'excitation,
- de sorte qu'au moins deux images de luminescence provoquée par l'impulsion lumineuse d'excitation sont obtenues à des intervalles de temps souhaités avec un ou plusieurs détecteurs,
- et de sorte que dans une première image (20), un affichage de l'intensité lumineuse est obtenu pour au moins un champ délimité (12) sur la base des informations de délimitation obtenues à partir d'une autre image (22) ou d'autres images.

16. Appareil utilisé en analyse d'image en vue de la délimitation d'au moins un champ (12) dans une première image (20) d'un objet (19) comprenant un instrument d'observation, tel qu'un microscope (28, 29, 30), au moins un moyen de détecteur (38, 48), tel qu'un appareil de prise de vues, et une unité d'analyse (42),
**caractérisé en ce que** l'appareil comprend un dispositif (37, 41, 49) qui transmet au moins une partie d'une seconde image (22) de l'objet (19) différant de la première image en temps ou en longueur d'onde mais sans modification de la position ou de l'emplacement des moyens de détecteur (38, 48) ou de l'objet (19) par rapport à un ou plusieurs moyens de détecteur et par l'intermédiaire de ces moyens par rapport à l'unité d'analyse (42), et l'unité d'analyse (42) est conçue pour segmenter la seconde image (22) afin de délimiter au moins un champ (12) dans la seconde image (22), et analyser ensuite la première image (20) en utilisant le ou les champs délimités (12) obtenus par la segmentation de la seconde image (22).

17. Appareil selon la revendication 16, **caractérisé en ce que** l'appareil incorpore un microscope (28, 29, 30), au moins un appareil de prise de vues (38, 48) et une unité de retard électronique (41) qui peut être régulée afin d'obtenir à la fois des images instantanées immédiates et des images TR à définition temporelle, et une unité d'analyse (42) qui, sur la base d'au moins une image (22), délimite au moins un champ (12) dans l'objet et, sur la base des informations de délimitation, cible au moins un champ délimité dans une autre image en vue d'une analyse d'image.

18. Appareil selon la revendication 16 ou 17, **caractérisé en ce que** l'appareil est équipé d'un obturateur rapide (37), tel qu'un intensificateur d'image pouvant être déclenché, et un appareil de prise de vues ou, en variante, un photodétecteur sensible à la position, dont le port de sortie numérique peut être déclenché de sorte que le même détecteur peut être utilisé pour mesurer les informations d'image à la fois de luminescence instantanée et de luminescence à définition temporelle.

19. Appareil selon la revendication 16 ou 17, **caractérisé en ce que** l'appareil incorpore un microscope à fluorescence (28), au moins un appareil de prise de vues (38, 48) et un ordinateur (42), dont la mémoire peut mémoriser une image de fluorescence TR à définition temporelle, numérisée, qui a été obtenue avec un microscope à fluorescence après un intervalle de temps suivant une impulsion d'excitation, et lequel ordinateur a également été équipé en vue d'une analyse d'une image de fluorescence instantanée qui est utilisée pour définir les champs (12) devant être délimités, c'est-à-dire une image de segmentation, et les informations de délimitation obtenues de cette manière sont utilisées pour analyser les champs délimités dans l'image de fluorescence TR numérisée dans la mémoire d'ordinateur.

20. Appareil selon la revendication 16, 17 ou 18, **caractérisé en ce qu'**un microscope à fluorescence (28), au moins un appareil de prise de vues (38, 48) et un ordinateur (42), dont la mémoire peut mémoriser une image de fluorescence instantanée, ou immédiate, classique qui est utilisée pour définir les champs (12) devant être délimités, c'est-à-dire une segmentation, et une image de fluorescence TR à définition temporelle, numérisée, qui a été obtenue avec un microscope à fluorescence après un intervalle de temps suivant une impulsion d'excitation, lequel ordinateur a été équipé en vue d'une analyse, sur la base des informations de délimitation obtenues, des champs délimités dans l'image de fluorescence TR numérisée mémorisée dans la mémoire d'ordinateur.

21. Appareil selon l'une des revendications 16 à 20, **caractérisé en ce que** l'appareil incorpore un appareil de prise de vues (38, 48) et une unité de filtres (45) comprenant au moins deux filtres pouvant être changés (46, 47), qui rendent possible d'obtenir deux ou plusieurs images filtrées prises à des intervalles de temps souhaités.

22. Appareil selon l'une quelconque des revendications 16 à 21, **caractérisé en ce que** l'appareil incorpore un appareil de prise de vues (38, 48), vers lequel au moins un trajet optique a été dirigé, et **en ce que** dans l'appareil de prise de vues est située une unité de filtrage (45) qui comporte deux ou plusieurs couches (57), celles-ci étant des couches de semiconducteur ou d'autres couches susceptibles de réaliser une fonction de séparation et par l'intermédiaire desquelles une imagerie peut être exécutée simultanément ou à des intervalles de temps souhaités, en utilisant au moins deux modes différents de filtrage.

23. Appareil selon l'une des revendications 16 à 21, **caractérisé en ce que** l'appareil incorpore un appareil de prise de vues (38, 48), vers lequel au moins un trajet optique a été dirigé, et **en ce que** dans l'appareil de prise de vues ou à l'extérieur de celui-ci est située une unité de filtrage (45) qui comprend des filtres spatiaux (57) tels qu'une matrice (56), laquelle unité réalise des fonctions de filtrage spatialement différentes en permettant une imagerie par au moins deux modes différents de filtrage.

24. Appareil selon l'une des revendications 21 à 23, **caractérisé en ce que** les couches formant l'unité de filtrage (45) sont parallèles et/ou les unes au-dessus des autres.

25. Appareil selon l'une des revendications 16 à 24, **caractérisé en ce que** l'appareil incorpore un microscope (28, 29, 30), au moins deux appareils de prise de vues (38, 48) et un dispositif (37, 41, 49) qui dirige au moins une partie du flux lumineux vers un premier appareil de prise de vues (38) et une partie des informations d'image vers l'autre appareil de prise de vues (48), et une unité d'analyse (42) qui, sur la base d'au moins une première image (22) délimite au moins un champ (12), et sur la base des informations de délimitation, cible au moins un champ délimité dans une autre image en vue d'une analyse d'image.

26. Appareil selon l'une des revendications 16 à 25, **caractérisé en ce que** l'appareil incorpore deux appareils de prise de vues (38, 48) et un séparateur de faisceau (49), qui sépare les informations d'image obtenues à partir de l'objet en deux parties destinées aux appareils de prise de vues, et **en ce qu'**au moins un appareil de prise de vues est équipé d'un obturateur rapide (37), tel qu'un intensificateur d'image pouvant être déclenché, et un appareil de prise de vues ou en variante un photodétecteur sensible à la position comprenant un port de sortie numérique pouvant être déclenché.

27. Appareil selon l'une des revendications 16 à 26, **caractérisé en ce que** l'appareil incorpore un appareil de prise de vues (38, 48) qui peut être réinitialisé à zéro sur la base des informations d'image de luminescence immédiate ou instantanée et être ouvert afin de mesurer une luminescence TR à définition temporelle émise par la même impulsion lumineuse d'excitation.
